# EUROPÄISCHE PATENTSCHRIFT

(11) **EP 1 771 675 B1**
(45) Veröffentlichungstag und Bekanntmachung des Hinweises auf die Patenterteilung: **23.12.2009**
(21) Anmeldenummer: 05766811.3
(22) Anmeldetag: 15.07.2005
(51) Int. Cl.: F16K 31/06, F16F 9/46

(54) **ELEKTRISCH ANSTEUERBARES VENTIL**
ELECTRICALLY CONTROLLABLE VALVE
SOUPAPE A COMMANDE ELECTRIQUE

(30) Priorität: 19.07.2004 DE 102004034896; 18.05.2005 DE 102005022710
(43) Veröffentlichungstag der Anmeldung: 11.04.2007
(73) Patentinhaber: Continental Teves AG & Co. oHG, 60488 Frankfurt (DE)
(72) Erfinder: FEIGEL, Hans-Jörg, 61191 Rosbach (DE)
(86) Internationale Anmeldenummer: PCT/EP2005/053411
(87) Internationale Veröffentlichungsnummer: WO 2006/008272

(56) Entgegenhaltungen:
- DE-A1- 19 624 898
- DE-A1- 19 938 884
- DE-C1- 4 008 326
- GB-A- 2 332 538

## Beschreibung

Die Erfindung betrifft ein elektrisch ansteuerbares Ventil, insbesondere für die Verwendung in einem regelbaren Stossdämpfer, nach dem Oberbegriff des Patentanspruchs 1.

Aus der DE 196 24 898 C2 sind bereits elektrisch ansteuerbare Ventile zur Verwendung in einem Stossdämpfer bekannt. Diese Ventile bilden eine Ventilbaugruppe, die aus einem Vorstufen- und einem Hauptstufenventil besteht. Zur elektrischen Ansteuerung des Vorstufenventils ist ein Stellmagnet vorgesehen, der zur variablen Einstellung eines Ventilöffnungsquerschnitts im Ventilgehäuse mit einem Ventilkolben verbunden ist, dessen Ventildichtflächen mit einem Ventilsitz im Ventilgehäuse zusammenwirken.

Ferner ist aus DE 40 08 326 C1 ein elektromagnetisch betätigbares Ventil bekannt, dessen Ventilkörper abhängig von seiner Hubstellung einen Bypass in einem Ventilgehäuse freigibt oder verschließt, sowie mit wenigstens einer im Ventilgehäuse fixierten Blattfeder zur Steuerung des Durchflusses zwischen zwei Arbeitsräumen eines Stoßdämpfers, in dem das Ventil eingesetzt ist.

Die Aufgabe der Erfindung ist es, ein Ventil, insbesondere für den Einsatz in einem Stoßdämpfer, mit möglichst geringem Aufwand derart zu gestalten, dass unter Verwendung möglichst einfacher, funktionssicherer Mittel eine Druckregel- als auch Druckbegrenzungsfunktion gewährleistet ist.

Diese Aufgabe wird erfindungsgemäß für ein Elektromagnetventil der angegebenen Art mit den kennzeichnenden Merkmalen des Patentanspruchs 1 gelöst.

Weitere Merkmale und Vorteile der Erfindung gehen aus der nachfolgenden Beschreibung eines Ausführungsbeispiels für ein Ventil in verschiedenen Betriebsstellungen hervor.

### Es zeigen:

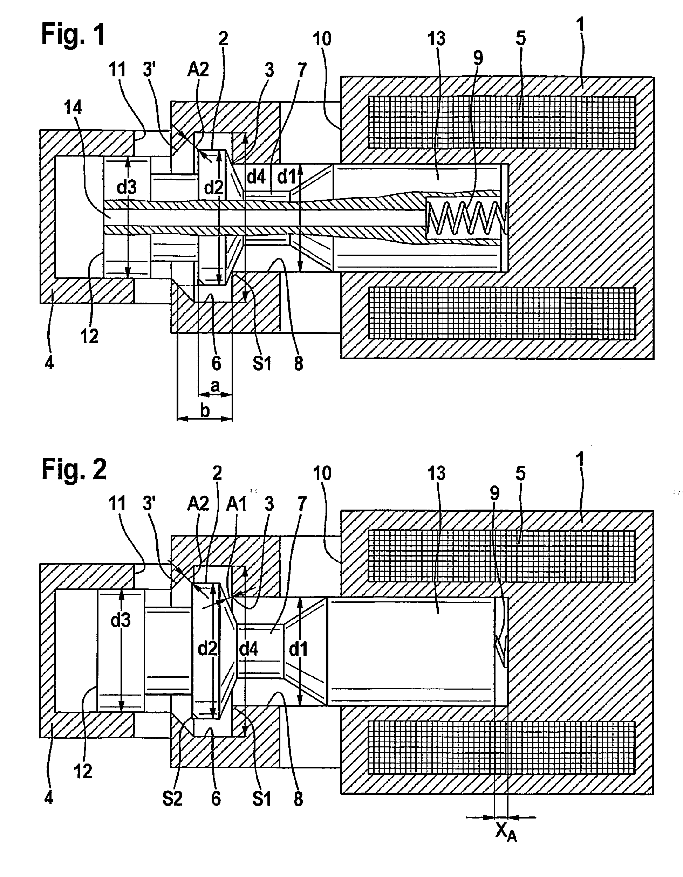

- Fig. 1: einen Längsschnitt durch ein Ventil mit den der Erfindung zugrundeliegenden Merkmalen in einer ersten Druckregelstellung, in welcher der Erregerstrom dem maximalen elektrischen Ansteuerstrom i-max der Ventilspule zur Betätigung eines Ventilschließkörpers entspricht, wodurch der gewünschte Fluidstrom unter hohem Fluiddruck das Ventil durchströmt, wozu ein erster Ventilöffnungsquerschnitt bis auf eine Blendenöffnung S1 verschlossen sowie ein stromaufwärts dazu angeordneter zweiter Ventilöffnungsquerschnitt A2 vollständig freigegeben ist,
- Figur 2: das Ventil nach Figur 1 in einer weiteren Druckregelstellung, in welcher der Erregerstrom dem minimalen elektrischen Ansteuerstrom imin entspricht, wodurch der gewünschte Fluidstrom unter geringem Fluiddruck das Ventil durchströmt, wozu infolge der Zwischenstellung des Ventilschließkörpers beide Ventilöffnungsquerschnitte A1, A2 großflächig freigegeben sind,

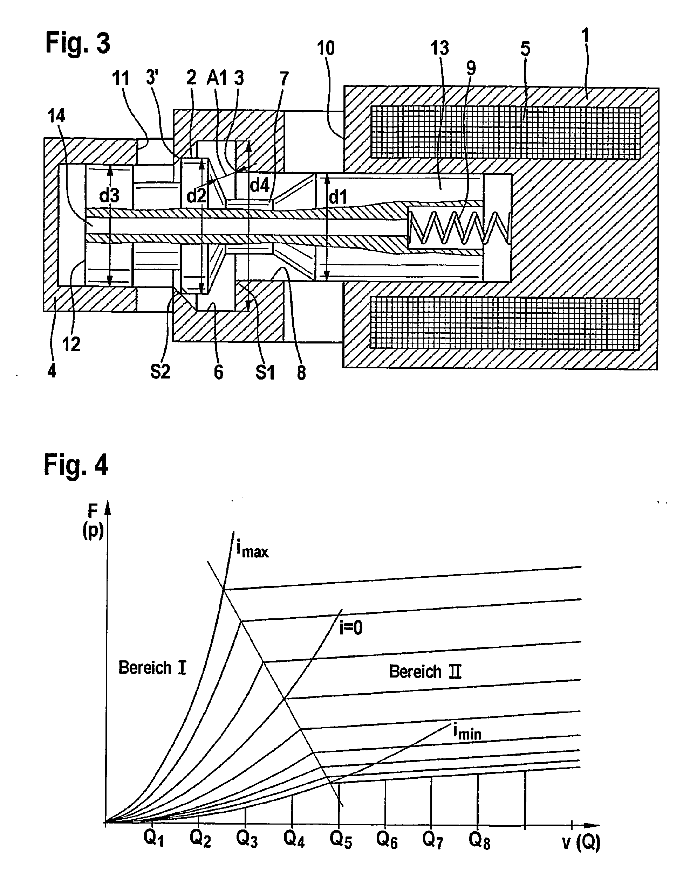

- Figur 3: das Ventil nach Figur 1 in einer Stellung, in welcher das Ventil elektrisch nicht angesteuert (Erregerstrom i=0) bzw. nicht ansteuerbar (Fail-Safe-Stellung) ist, wobei zur Druck- und Durchflussbegrenzung auf gewünschte, fest eingestellte Werte der erste Ventilöffnungsquerschnitt A1 vollständig freigegeben sowie der zweite Ventilöffnungsquerschnitt A2 bis auf eine Blendenöffnung S2 verschlossen ist,
- Figur 4: ein Kennlinienfeld zur Verdeutlichung der aus den Ventilschaltstellungen nach Fig. 1-3 resultierenden Fluidströme.

Exemplarisch für alle Abbildungen soll anhand der Figur 1 zunächst der prinzipielle Aufbau des erfindungsgemäßen Ventils beschrieben werden.

Es zeigt die Fig. 1 im Längsschnitt ein elektrisch betätigbares, monodirektional betriebenes Ventil, das vorzugsweise zur Regelung eines Stossdämpfers in einem Kraftfahrzeug verwendet wird. Das Ventil besteht aus einem elektrischen Stellantrieb 1, bestehend aus einem in Tauchkolbenbauweise ausgeführten Magnetanker 13 und einer Ventilspule 5. Der Magnetanker 13 ist über einen verjüngten Fortsatz 7 mit dem Ventilschließkörper 2 verbunden. Der Ventilschließkörper 2 hat im wesentlichen die Kontur eines Stufenkolbens, der mit seinen beiden Stirnflächen an zwei diametral zueinander im Ventilgehäuse 4 ausgerichteten Ventilsitzflächen 3, 3' wechselweise anlegbar ist. Die beiden Ventilsitzflächen 3, 3' sind durch die Flanken einer im Ventilgehäuse 4 eingeformten Ringnut 6 gebildet, deren Ringnutbreite b und Ringnutdurchmesser d4 zur Aufnahme des Ventilschließkörpers 2 und Hindurchführung des vom Einlasskanal 11 kommenden Fluids größer gewählt ist als die Breite a und der Außendurchmesser d2 des Ventilschließkörpers 2. An die zur Bildung der ersten Steuerkante 3 vorgesehenen rechten Flanke der Ringnut 6 schließt sich ein im Durchmesser d1 gegenüber dem Durchmesser d2 des Ventilschließkörpers 2 verkleinerter Bohrungsabschnitt 8 an, in dem der Magnetanker 13 geführt ist. Ein zwischen dem Bohrungsabschnitt 8 und dem verjüngten Fortsatz 7 vorgesehener Ringraum gewährleistet eine Hindurchführung des Fluids in Richtung des radial in den ersten Bohrungsabschnitt 8 einmündenden Auslasskanals 10.

Der Einlasskanal 11 mündet zwischen dem Ventilschließkörper 2 und einem mit dem Ventilschließkörper 2 verbundenen Stufenkolben 12 stromaufwärts zur zweiten Ventilsitzfläche 3' in das Ventilgehäuse 4 ein. Der Stufenkolben 12 ist ebenso wie der Magnetanker 13 als präzise im Ventilgehäuse 4 geführter Tauchkolben konzipiert, so dass der zwischen dem Stufenkolben 12 und dem Magnetanker 13 angeordnete Ventilschließkörper 2 präzise zwischen den beiden Ventilsitzflächen 3, 3' bewegbar ist. Um einen Druckausgleich für die Leckageströme entlang dem metallisch im Ventilgehäuse 4 dichtenden Mantelflächen des Stufenkolbens 12 und des Magnetankers 13 zu ermöglichen, weist die aus dem Stufenkolben 12, dem Ventilschließkörper 2, dem Fortsatz 7 und dem Magnetanker 13 bestehende einstückige Ventilbaugruppe eine Durchgangsbohrung 14 auf, die sich längs in der Ventilbaugruppe erstreckt.

Ferner befindet sich zwischen dem Magnetanker 13 und dem Ventilgehäuse 4 eine Druckfeder 9, um den Ventilschließkörper 2 im elektrisch stromlosen Zustand an der zweiten Ventilsitzfläche 3' positionieren zu können. Generell wird die Dichtwirkung zwischen den Ventilsitzflächen 3, 3' und dem Ventilsitzkörper 2 ausschließlich durch Kantenberührung hergestellt.

Durch das Zusammenwirken des Ventilschließkörpers 2 mit den Ventilsitzflächen 3, 3' ergeben sich bei elektromagnetischer Erregung des Stellantriebs 1 zwei variabel einstellbare Ventilöffnungsquerschnitte A1, A2 im Bereich der Ringnut 6, durch die ein geregelter Fluidstrom gelangt.

Der veränderbare zweite Ventilöffnungsquerschnitt A2 befindet sich stromaufwärts zum ersten Ventilöffnungsquerschnitt A1 in einer Reihenschaltung zum ersten Ventilöffnungsquerschnitt A1, wobei beide Ventilöffnungsquerschnitte A1, A2 mittels des ersten Ventilschließkörpers 2 reziprok proportional zueinander zu öffnen bzw. zu verschließen sind.

Im Bereich des ersten Ventilöffnungsquerschnitts A1 befindet sich eine Blendenöffnung S1, deren Blendenquerschnitt kleiner ist als eine im Bereich des zweiten Ventilöffnungsquerschnitt A2 vorgesehene Blendenöffnung S2. Die Blendenöffnungen S1, S2 sind entweder als Kerben in den beiden Ventilsitzflächen 3, 3' oder in den beiden Stirnflächen des Ventilschließkörpers 2 eingebracht. Durch die Blendenöffnungen S1, S2 lässt sich beim Anlegen des Ventilschließkörpers 2 an der ersten oder zweiten Ventilsitzfläche 3, 3' der Druckanstieg p in Abhängigkeit vom Volumenstrom Q (Bereich I des in Figur 4 abgebildeten Kennfeldes) in gewünschter Weise begrenzen.

Um das in Figur 4 abgebildete Kennlinienfeld und damit die gewünschte Funktion des Ventils realisieren zu können, sind die hydraulische beaufschlagten Flächen der Ventilbaugruppe unter Berücksichtung der Feder- und Magnetkraft unterschiedlich zu dimensionieren, weshalb der Außendurchmesser d3 des Stufenkolbens 12 kleiner als der Außendurchmesser d2 des Ventilschließkörpers 2, andererseits jedoch größer als der Durchmesser d1 im Bohrungsabschnitt bemessen ist.

Der Erfindungsgegenstand ist derart konzipiert, dass ein axialer Arbeitsluftspalt XA des elektrischen Stellantriebs 1 auf der vom Ventilschließkörper 2 abgewandten Seite des mit dem Ventilschließkörper 2 zusammenwirkenden. Magnetankers 13 angeordnet ist, so dass bei elektrischer Betätigung des Stellantriebs 1 der Ventilschließkörper 2 von der Ruheposition an der zweiten Ventilsitzfläche 3' in Richtung auf die erste Ventilsitzfläche 3 bewegbar ist.

Der Ventilschließkörper 2 ist aufgrund der unterschiedlichen Wirkdurchmesser der Ventilbaugruppe hydraulisch nicht druckausgeglichen, so dass unter Berücksichtigung der zwischen dem Ventilschließkörper 2 und dem Stellantrieb 1 angeordneten Druckfeder 9 das in Figur 4 dargestelltes Kennfeld zustande kommt.

Die bei der Durchströmung des Ventils entstehen hydraulischen Strömungskräfte sind unter Berücksichtigung der strömungsgünstigen Gestaltung des Magnetankers 13 zumindest teilweise durch die skizzierte Körpergeometrie des Ventilschließkörpers 2 im Zusammenwirken mit den Ventilsitzflächen 3, 3' kompensiert.

Nachfolgend soll nunmehr beispielhaft anhand den Fig. 1-4 die unterschiedlichen Ventilstellungen nebst den zugehörigen Kennlinien aufgezeigt werden.

Die Figur 1 zeigt das Ventil mit den der Erfindung zugrunde liegenden Merkmalen in einer ersten Druckregelstellung, in welcher der Erregerstrom dem maximalen elektrischen Ansteuerstrom der am Ventilgehäuse 4 angebrachten Ventilspule 5 entspricht. Infolge des maximalen Erregerstroms imax hält der Magnetanker 13 den Ventilschließkörper 2 entgegen der Wirkung der Rückstellfeder 5 an der ersten Ventilsitzfläche 3, so dass zunächst ausschließlich über die Blendenöffnung S1 der Fluidstrom unter hohem Druck p vom Einlasskanal 11 zum Auslasskanal 10 gelangt. Infolge der Wirkung der Blendenöffnung S1 ergibt sich der in Figur 4 dargestellte Kennlinienverlauf im Kennfeldbereich I. Ab einem bestimmten Fluidstrom Q durch das Ventil ist der Druck p so groß, dass der Ventilschließkörper 2 infolge den hydraulisch beaufschlagten Stirnflächen der Ventilbaugruppe entgegengesetzt zur Wirkung der Magnetkraft von der ersten Ventilsitzfläche 3 abhebt, was zu einer Abflachung des weiteren Kennlinienverlaufs in Figur 4 (Kennfeldbereich II, Kennlinie imax) führt.

Die Figur 2 zeigt abweichend von Figur 1 das Ventil in einer Regelstellung, in welcher der Erregerstrom dem minimalen elektrischen Ansteuerstrom der Ventilspule 12 entspricht. Infolge des minimalen Erregerstroms imin verschiebt der Magnetanker 13 den Ventilschließkörper 2 entgegen der Wirkung der Druckfeder 9 in einer von beiden Ventilsitzflächen 3, 3'abgehobenen stabilen Zwischenlage, in der beide Strömungsquerschnitte A1, A2 freigegeben sind und einen maximalen Durchfluß erlauben. In dieser Druckregelstellung kommt somit die im Diagramm nach Fig. 4 abgebildete Druckregelkennlinie imin zustande, woraus ein flacher Druckanstieg mit zunehmendem Volumenstrom Q zu entnehmen ist.

Die Figur 3 zeigt das Ventil in einer Stellung, in welcher das Ventil elektrisch nicht angesteuert (Erregerstrom i=0) bzw. nicht ansteuerbar ist (Fail-Safe-Stellung). In diesem Zustand liegt der Ventilschließkörper 2 infolge der Wirkung der Druckfeder 9 zunächst an der zweiten Ventilsitzfläche 3' an, wodurch der zweite Ventilöffnungsquerschnitt A2 quasi bis auf den Fluidstrom über die Blendenöffnung S2 versperrt ist. Es ergibt sich infolge der Blendenwirkung zunächst der aus Figur 4 ersichtliche steile Kennlinienverlauf im Bereich I. Mit zunehmenden Fluidstrom wächst der auf die Stirnflächen der Ventilbaugruppe wirksame Hydraulikdruck so weit an, dass der Ventilschließkörper 2 entgegen der Wirkung der Druckfeder 9 hydraulisch betätigt von der zweiten Ventilsitzfläche 3' abhebt, wodurch die Druck/Volumenstromkennlinie in Figur 4 beim Erregerstrom i=0 im Bereich II einen für die Auslegung der druckbeaufschlagten Ventilflächen charakteristischen Verlauf aufweist.

Entsprechend dem Diagramm nach Fig. 4 lässt sich je nach Größe des Erregerstroms i eine beliebige Kurvenschar durch beliebig viele Positionen des Ventilschließkörpers 2 dar stellen, wovon explizit anhand den Figuren 1-3 drei Kennlinienverläufe beispielhaft herausgestellt wurden. Auf der Ordinate des Diagramms ist jeweils der Druckanstieg p sowie entlang der Abszisse der Volumenstrom Q aufgetragen. Der steilere Anstieg der Kennlinie für i=imax gegenüber der Kennlinie für die Bedingung i=0 ergibt sich dadurch, dass die Blendenöffnung S1 kleiner als die Blendenöffnung S2 ist. Für die Bedingung, dass i=imin ist, ergeben sich die größten Strömungsquerschnitte A1, A2 im Bereich der beiden Blendenöffnungen S1, S2, wodurch ein besonders drosselfreier und somit flacher Kennlinienverlauf den maximalen Durchfluß durch das Ventil veranschaulicht. In der konkreten Verwendung des vorgestellten Ventils für einen Stoßdämpfer bedeutet dies, dass mit steilerem Kennlinienverlauf die Dämpferwirkung zunimmt.

Bezugszeichenliste
- 1: Stellantrieb
- 2: Ventilschließkörper
- 3: Ventilsitzfläche
- 3': Ventilsitzfläche
- 4: Ventilgehäuse
- 5: Ventilspule
- 6: Ringnut
- 7: Fortsatz
- 8: Bohrungsabschnitt
- 9: Druckfeder
- 10: Auslasskanal
- 11: Einlasskanal
- 12: Stufenkolben
- 13: Magnetanker
- 14: Durchgangsbohrung
- A1: erster Ventilöffnungsquerschnitt
- A2: zweiter Ventilöffnungsquerschnitt
- S1: erste Blendenöffnung
- S2: zweite Blendenöffnung
- XA: Axialluftspalt

## Patentansprüche

1. Elektrisch ansteuerbares Ventil, insbesondere für einen regelbaren Stoßdämpfer, mit einem Stellantrieb (1), einem vom Stellantrieb (1) betätigbaren, hydraulisch nicht druckausgeglichenen Ventilschließkörper (2), der wahlweise entweder an einer ersten oder einer zweiten Ventilsitzfläche (3, 3') im Ventilgehäuse (4) anlegbar ist, die in einer Reihenschaltung angeordnet sind, um einen ersten und einen zweiten Ventilöffnungsquerschnitt (A1, A2) mittels des Ventilschließkörpers (2) reziprok proportional zueinander verändern zu können, wobei ein axialer Arbeitsluftspalt (XA) des elektrischen Stellantriebs (1) auf der vom Ventilschließkörper (2) abgewandten Seite eines mit dem Ventilschließkörper (2) zusammenwirkenden Magnetankers (13) angeordnet ist, so dass bei elektrischer Betätigung des Stellantriebs (1) der Ventilschließkörper (2) vom Stellantrieb (1) in Richtung auf die erste Ventilsitzfläche (3) bewegbar ist, **dadurch gekennzeichnet, dass** der Ventilschließkörper (2) durch unterschiedlich große, hydraulisch beaufschlagbare Stirnflächen einer Ventilbaugruppe gebildet ist, die aus dem Ventilschließkörper (2), einem mit dem Ventilschließkörper (2) verbundenen Stufenkolben (12) und dem über einen Fortsatz (7) am Ventilschließkörper (2) angebrachten Magnetanker (13) besteht.

2. Ventil nach Anspruch 1, **dadurch gekennzeichnet, dass** der Ventilschließkörper (2) im Zusammenwirken mit einer zwischen dem Ventilschließkörper (2) und dem Stellantrieb (1) angeordneten Druckfeder (9) im elektrisch stromlosen Zustand des Stellantriebs (1) zur hydraulischen Druckbegrenzung an der zweiten Ventilsitzfläche (3') verharrt.

3. Ventil nach Anspruch 1, **dadurch gekennzeichnet, dass** der Ventilschließkörper (2) zur hydraulischen Druckbegrenzung im elektrisch erregten Zustand des Stellantriebs (1) entgegengesetzt zur Wirkung einer zwischen dem Ventilschließkörper (2) und dem Stellantrieb (1) angeordneten Druckfeder (9) an der ersten Ventilsitzfläche (3) verharrt.

4. Ventil nach wenigstens einem der vorangegangenen Ansprüche, **dadurch gekennzeichnet, dass** zwischen der ersten Ventilsitzfläche (3) und dem Ventilschließkörper (2) eine erste Blendenöffnung (S1) angeordnet ist, deren Blendenquerschnitt (S1) kleiner ist als eine zwischen der zweiten Ventilsitzfläche (3') und dem Ventilschließkörper (2) angeordnete zweite Blendenöffnung (S2).

5. Ventil nach einem der vorangegangenen Ansprüche, **dadurch gekennzeichnet, dass** die bei der Durchströmung des Ventils entstehen hydraulischen Strömungskräfte zumindest teilweise durch den Ventilschließkörper (2), die zweite Ventilsitzfläche (3') und durch den Magnetanker (13) kompensiert sind.

6. Ventil nach Anspruch 5, **dadurch gekennzeichnet, dass** der Ventilschließkörper (2) in Richtung der ersten Ventilsitzfläche (3) eine als Schrägschulter ausgeführte Körpergeometrie aufweist.

7. Ventil nach Anspruch 5, **dadurch gekennzeichnet, dass** die zweite Ventilsitzfläche (3') als Kegeldichtsitz ausgeführt ist.

8. Ventil nach Anspruch 5, **dadurch gekennzeichnet, dass** der Magnetanker (13) in Richtung des Ventilschließkörpers (2) eine Kegelstirnfläche aufweist.

## Claims

1. Electrically controllable valve, in particular for a regulatable shock absorber, with an actuating drive (1), and with a hydraulically non-pressure-compensated valve-closing body (2) which can be actuated by the actuating drive (1) and can be brought to bear in the valve housing (4) selectively either against a first or against a second valve-seat surface (3, 3') which are arranged in series, so that a first and a second valve-opening cross section (A1, A2) can be varied reciprocally in proportion to one another by means of the valve-closing body (2), an axial working air gap (XA) of the electrically actuating drive (1) being arranged on the side, facing away from the valve-closing body (2), of a magnet armature (13) cooperating with the valve-closing body (2), so that, when the actuating drive (1) is actuated electrically, the valve-closing body (2) can be moved in the direction of the first valve-seat surface (3) by the actuating drive (1), **characterized in that** the valve-closing body (2) is formed by hydraulically loadable end faces of different size of a valve sub-assembly which consists of the valve-closing body (2), of a stepped piston (12) connected to the valve-closing body (2) and of the magnet armature (13) attached to the valve-closing body (2) via an extension (7).

2. Valve according to Claim 1, **characterized in that**, for hydraulic pressure limitation, the valve-closing body (2), in cooperation with a compression spring (9) arranged between the valve-closing body (2) and the actuating drive (1), remains against the second valve-seat surface (3') when the actuating drive (1) is in the electrically currentless state.

3. Valve according to Claim 1, **characterized in that**, for hydraulic pressure limitation, the valve-closing body (2) remains against the first valve-seat surface (3), counter to the action of a compression spring (9) arranged between the valve-closing body (2) and the actuating drive (1), when the actuating drive (1) is in the electrically excited state.

4. Valve according to at least one of the preceding claims, **characterized in that**, between the first valve-seat surface (3) and the valve-closing body (2), a first aperture (S1) is arranged, the aperture cross section (S1) of which is smaller than that of a second aperture (S2) arranged between the second valve-seat surface (3') and the valve-closing body (2).

5. Valve according to one of the preceding claims, **characterized in that** the hydraulic flow forces arising during the flow through the valve are compensated at least partially by the valve-closing body (2), the second valve-seat surface (3') and by the magnet armature (13).

6. Valve according to Claim 5, **characterized in that** the valve-closing body (2) has in the direction of the first valve-seat surface (3) a body geometry designed as an oblique shoulder.

7. Valve according to Claim 5, **characterized in that** the second valve-seat surface (3') is designed as a conical sealing seat.

8. Valve according to Claim 5, **characterized in that** the magnet armature (13) has in the direction of the valve-closing body (2) a conical end face.

## Revendications

1. Soupape à commande électrique, en particulier pour amortisseur réglable, et présentant
un entraînement de réglage (1),
un corps (2) de fermeture de soupape actionné par l'entraînement de réglage (1) sans compensation hydraulique de la pression, qui peut être placé sélectivement sur une première ou une deuxième surface (3, 3') de siège de soupape disposées dans le boîtier de soupape (4) et placées dans un circuit série pour pouvoir modifier de manière inversement proportionnelle une première et une deuxième section transversale (A1, A2) d'ouverture de soupape au moyen du corps (2) de fermeture de soupape,
un entrefer axial de travail (XA) de l'entraînement électrique de réglage (1) étant disposé sur le côté non tourné vers le corps (2) de fermeture de soupape d'un induit magnétique (13) qui coopère avec le corps (2) de fermeture de soupape, de telle sorte que lorsque l'entraînement de réglage (1) est actionné électriquement, le corps (2) de fermeture de soupape peut être déplacé en direction de la première surface (3) de siège de soupape par l'entraînement de réglage (1),
**caractérisée en ce que**
le corps (2) de fermeture de soupape est formé de surfaces frontales d'un module de soupape, qui ont des tailles différentes et qui peuvent être sollicitées hydrauliquement, et
**en ce que** le module de soupape est constitué du corps (2) de fermeture de soupape, d'un piston à gradins (12) relié au corps (2) de fermeture de soupape et de l'induit magnétique (13) placé par l'intermédiaire d'un prolongement (7) sur le corps (2) de fermeture de soupape.

2. Soupape selon la revendication 1, **caractérisée en ce qu'**en coopération avec un ressort de compression (9) disposé entre le corps (2) de fermeture de soupape et l'entraînement de réglage (1), le corps (2) de fermeture de soupape se bloque sur la deuxième surface (3') de siège de soupape lorsque l'entraînement de réglage (1) n'est pas alimenté en courant, pour limiter hydrauliquement la pression.

3. Procédé selon la revendication 1, **caractérisé en ce que** pour limiter hydrauliquement la pression lorsque l'entraînement de réglage (1) est à l'état électriquement excité, le corps (2) de fermeture de soupape se bloque sur la première surface (3) de siège de soupape en opposition à l'action d'un ressort de compression (9) disposé entre le corps (2) de fermeture de soupape et l'entraînement de réglage (1).

4. Soupape selon au moins l'une des revendications précédentes, **caractérisée en ce qu'**une première ouverture d'écran (S1) dont la section transversale d'écran (S1) est plus petite qu'une deuxième ouverture d'écran (S2) disposée entre la deuxième surface (3') de siège de soupape et le corps (2) de fermeture de soupape est disposée entre la première surface (3) de siège de soupape et le corps (2) de fermeture de soupape.

5. Soupape selon l'une des revendications précédentes, **caractérisée en ce que** les forces d'écoulement hydraulique qui sont exercées lorsque la soupape est traversée par un écoulement sont compensées au moins en partie par le corps (2) de fermeture de soupape, la deuxième surface (3') de siège de soupape et l'induit magnétique (13).

6. Soupape selon la revendication 5, **caractérisée en ce que** dans la direction de la première surface (3) de siège de soupape, le corps (2) de fermeture de soupape présente une géométrie configurée en épaulement oblique.

7. Soupape selon la revendication 5, **caractérisée en ce que** la deuxième surface (3') de siège de soupape est configurée comme siège conique d'étanchéité.

8. Soupape selon la revendication 5, **caractérisée en ce que** l'induit magnétique (13) présente en direction du corps (2) de fermeture de soupape une surface frontale conique.
